# EUROPÄISCHE PATENTANMELDUNG

(11) **EP 2 136 087 A1**
(43) Veröffentlichungstag der Anmeldung: **23.12.2009**
(21) Anmeldenummer: 09006646.5
(22) Anmeldetag: 16.05.2009
(51) Int. Cl.: F16B 13/14, B05C 7/00, B05C 17/005, E21D 20/02

(54) **Verfahren und Vorrichtung zum Einbringen einer Ankermasse in ein Sackloch**

(30) Priorität: 17.06.2008 DE 102008028782
(71) Anmelder: fischerwerke GmbH & Co. KG, 72178 Waldachtal (DE)
(72) Erfinder: Assadi, Amir, 79312 Emmendingen (DE); Dienst, Clemens, 79341 Kenzingen (DE)

(57) **Zusammenfassung**

Die Erfindung betrifft ein Verfahren und eine Vorrichtung zum Einbringen einer Ankermasse (3), beispielsweise eines Mörtels, in ein Sackloch (4) in einem Ankergrund (5) beispielsweise zur Verankerung eines nicht dargestellten Ankers. Die Erfindung schlägt vor, die Ankermasse (3) mit einem Injektionsrohr (1) einzubringen und gleichzeitig Luft durch einen Saugschlauch (6) an einem Lochgrund (7) aus dem Sackloch (4) abzusaugen.

## Beschreibung

Die Erfindung betrifft ein Verfahren und eine Vorrichtung zum Einbringen einer Ankermasse in ein Sackloch mit den Merkmalen der Oberbegriffe der unabhängigen Ansprüche.

Die Erfindung ist insbesondere für eine sog. chemische Verankerung gedacht. Bei einer chemischen Verankerung wird ein Anker mittels einer Ankermasse in einem als Sackloch ausgeführten Bohrloch in einem Ankergrund verankert. Der Ankergrund ist beispielsweise ein Mauerwerk oder Beton. Als Anker finden Stangen und Stäbe Verwendung, insbesondere Gewindestäbe oder sog. Dywidag-Stäbe, die eine geriffelte, Gewindefragmente bildende Oberfläche aufweisen. Es sind auch spezielle Ankerstäbe mit axial hintereinander angeordneten Kegelstümpfen bekannt. Die Ankermasse ist eine aushärtende Masse, beispielsweise ein Ein- oder Mehrkomponenten-Mörtel oder -kleber, der den Anker nach dem Aushärten stoffschlüssig und ggf. zusätzlich kraft-und/oder formschlüssig im Sackloch verankert.

Eine Möglichkeit zum Einbringen einer Ankermasse in ein Sackloch, insbesondere ein tiefes Sackloch zur Erstellung eines Bewehrungsanschlusses, ist die Verwendung eines Injektionsrohrs. Um eine gute Verfüllung des Sacklochs zu erreichen wird das Injektionsrohr bis an oder nahe an einen Lochgrund eingebracht und die Ankermasse durch das Injektionsrohr in das Sackloch eingebracht. Während des Einbringens wird das Injektionsrohr entsprechend der Verfüllung des Sacklochs zurückgezogen. Beispielhaft für diese Art des Einbringens einer Ankermasse in ein Sackloch wird auf das Gebrauchsmuster DE 299 11 429 U1 verwiesen. Ein Nachteil dieser Art des Einbringens einer Ankermasse in ein Sackloch ist der Druckverlust aufgrund des Strömungswiderstands im Injektionsrohr, der bei einer zähflüssigen Ankermasse hoch ist. Ein weiterer Nachteil ist der Verlust der im Injektionsrohr verbleibenden Ankermasse und ein Aushärten der Ankermasse im Injektionsrohr, so dass dieses zwar zum Verfüllen einer ganzen Anzahl Sacklöcher verwendbar ist, jedoch nach Beendigung der Arbeit durch die im Injektionsrohr aushärtende Ankermasse unbrauchbar wird.

Aufgabe der Erfindung ist, eine verbesserte Möglichkeit zum Einbringen einer Ankermasse in ein Sackloch vorzuschlagen.

Diese Aufgabe wird erfindungsgemäß durch die Merkmale der unabhängigen Ansprüche gelöst. Die Erfindung schlägt vor, während des Einbringens der Ankermasse in das Sackloch Luft zwischen einem Lochgrund des Sacklochs und der Ankermasse aus dem Sackloch abzusaugen. Vorzugsweise wird die Luft nahe einem Lochgrund des Sacklochs abgesaugt. Unter "Luft" ist verallgemeinernd ein im Sackloch zwischen dem Lochgrund und der Ankermasse enthaltenes Fluid zu verstehen, sofern nicht oder nicht ausschließlich Luft im Sackloch enthalten ist. Durch die Absaugung der Luft wird die Ankermasse in Richtung des Lochgrunds gefördert, eine gleichmäßige und blasenfreie Verfüllung des Sacklochs mit der Ankermasse ist möglich. Eine Verfüllung tiefer Sacklöcher mit Tiefen von mehreren Metern, beispielsweise für einen nachträglichen Bewehrungsanschluss, ist möglich. Das Einbringen der Ankermasse kann mit einem kurzen Injektionsrohr erfolgen, die Länge des Injektionsrohrs ist unabhängig von der Tiefe des Sacklochs. Der Druckverlust im Injektionsrohr ist bei einem kurzen Injektionsrohr niedrig. Vorzugsweise erfolgt das Einbringen der Ankermasse nahe einer Lochmündung des Sacklochs.

Die erfindungsgemäße Vorrichtung sieht ein Injektionsrohr zum Einbringen der Ankermasse in das Sackloch vor, wie es auch im Stand der Technik bekannt ist. Die Erfindung ermöglicht die Verwendung eines kurzen Injektionsrohrs, weil die Ankermasse auch in ein tiefes Sackloch nahe der Lochmündung eingebracht werden kann. Die Vorteile eines kurzen Injektionsrohrs sind bereits zum erfindungsgemäßen Verfahren erläutert worden, nämlich ein niedriger Druckverlust im Injektionsrohr, weil der Strömungswiderstand eines kurzen Injektionsrohrs niedrig ist, und ein niedriger Verlust an Ankermasse, die nach Gebrauch im Injektionsrohr eintrocknet.

Des Weiteren weist die erfindungsgemäße Vorrichtung einen Saugschlauch auf, der über das Injektionsrohr vorsteht. Der Saugschlauch ist vorzugsweise so lang, dass er bis nahe an einen Lochgrund des Sacklochs reicht. Muss oder soll das Sackloch nicht vollständig bis zum Lochgrund verfüllt werden, kann der Saugschlauch entsprechend kürzer sein. Durch den Saugschlauch wird Luft oder allgemein ein Gas oder Fluid, das sich zwischen dem Lochgrund und der Ankermasse im Sackloch befindet, während des Einbringens der Ankermasse in das Sackloch aus dem Sackloch abgesaugt. Durch das Absaugen der Luft wird die Ankermasse in Richtung des bzw. zum Lochgrund des Sacklochs gefördert. Auf diese Weise wird eine vollständige Verfüllung des Sacklochs mit der Ankermasse erreicht. Das Einbringen der Ankermasse kann beendet werden, wenn Ankermasse in den Saugschlauch angesaugt wird, was an einer sprungartigen Änderung des Saugdrucks feststellbar ist.

Mit der erfindungsgemäßen Vorrichtung und dem erfindungsgemäßen Verfahren ist auch eine Teilbefüllung des Sacklochs mit einer Ankermasse möglich, deren Volumen so bemessen ist, dass sie zusammen mit einem anschließend einzubringenden Anker das Sackloch im Wesentlichen vollständig ausfüllt. Mit "im Wesentlichen" ist auch gemeint, dass die Ankermasse das Sackloch nicht ganz bis zur Lochmündung ausfüllt oder dass beim Einbringen des Ankers ein kleines Volumen Ankermasse aus dem Sackloch austritt. Das ist eine Frage, wie genau die Tiefe des Sacklochs bemessen ist, ob es in einer Lochwandung Hohlräume gibt, die die Ankermasse ausfüllt, wie tief der Anker eingebracht wird, usw. Auch ist mit dem erfindungsgemäßen Verfahren und der erfindungsgemäßen Vorrichtung das Einbringen der Ankermasse in das Sackloch möglich, wenn sich der Anker bereits im Sackloch befindet. In diesem Fall wird es meist erforderlich sein, den Anker in irgendeiner Weise im Sackloch ausgerichtet zu fixieren, evtl. auch von Hand zu halten.

Die Begriffe "Injektionsrohr" und "Saugschlauch" sind nicht eng auf ein Rohr bzw. einen Schlauch eingeschränkt zu verstehen, sondern allgemein im Sinne eines länglichen Hohlkörpers, wobei das Injektionsrohr nicht starr sein muss, sondern auch flexibel, also ein Schlauch sein kann und umgekehrt der Saugschlauch nicht zwingend flexibel sein muss, sondern ein Rohr sein kann. Die beiden Begriffe "Injektionsrohr" und "Saugschlauch" sind anhand ihrer Funktionen, nämlich des Einbringens der Ankermasse in das Sackloch und des Absaugens der Luft aus dem Sackloch zu verstehen und auszulegen. Andere Begriffe für das Wort "Injektionsrohr" sind beispielsweise "Lanze", "Tülle", "Düse" und "Schlauch", die auch für den Saugschlauch in Betracht kommen.

Das Injektionsrohr und der Saugschlauch müssen nicht miteinander verbunden sein, allerdings kann es die Handhabung vereinfachen, wenn sie verbunden sind, so dass der Saugschlauch um eine gewünschte Länge, die von der Tiefe des Sacklochs abhängig ist, über das Injektionsrohr vorsteht. Eine Ausgestaltung der Erfindung sieht einen Verschluss für die Lochmündung des Sacklochs vor, durch die das Injektionsrohr und der Saugschlauch durchgeführt sind. Der Verschluss verbindet das Injektionsrohr mit dem Saugschlauch. Der Saugschlauch kann beispielsweise ein Stopfen mit zwei Durchgangslöchern, eines für das Injektionsrohr und eines für den Saugschlauch, sein. Zu einer Einstellung der Länge, um die der Saugschlauch über das Injektionsrohr vorsteht, wird der Saugschlauch in dem den Verschluss bildenden Stopfen verschoben. Der Verschluss wird auf die Lochmündung des Sacklochs aufgesetzt und/oder in die Lochmündung des Sacklochs gesteckt und verschließt die Lochmündung. Dadurch wird ein Austreten von Ankermasse aus dem Sackloch vermieden. Der Verschluss muss an der Lochmündung nicht abdichten, trotzdem ermöglicht er einen Überdruck der meist zähflüssigen Ankermasse im Sackloch, der eine gute Verfüllung mit einer gewissen Verdichtungswirkung ermöglicht. Nach dem Einbringen der Ankermasse in das Sackloch wird der Verschluss vom Sackloch entfernt und der Anker eingebracht.

Eine Ausgestaltung der Erfindung sieht eine Strahlpumpe vor, an die der Saugschlauch angeschlossen ist und mit der ein Unterdruck im Sackloch erzeugbar ist. Eine Strahlpumpe hat einen Fluidstrahl (Flüssigkeit oder Gas) als Treibmedium, der eine Pumpwirkung erzeugt. Eine Druckquelle für den Fluidstrahl, also beispielsweise eine Pumpe, ein Gebläse, ein Kompressor oder ein Druckspeicher, ist stromaufwärts der Strahlpumpe angeordnet. Das hat den Vorteil, dass keine Ankermasse zur Druckquelle gelangt, wenn Ankermasse durch den Saugschlauch der erfindungsgemäßen Vorrichtung angesaugt wird. Die Druckquelle wird dadurch nicht von der Ankermasse "verschmutzt". Die Strahlpumpe lässt sich einfach dadurch reinigen, dass sie betrieben und dabei Luft angesaugt wird. Der Fluidstrahl reinigt die Strahlpumpe von etwaiger Ankermasse, er bläst die Ankermasse aus der Strahlpumpe aus.

Die Erfindung wird nachfolgend anhand eines in der Zeichnung dargestellten Ausführungsbeispiels näher erläutert. Die einzige Figur zeigt eine erfindungsgemäße Vorrichtung, anhand derer auch das erfindungsgemäße Verfahren erläutert wird.

Die in der Zeichnung dargestellte, erfindungsgemäße Vorrichtung weist ein Injektionsrohr 1 auf, das beispielsweise an eine Kartusche 2 angeschlossen ist, in der eine Ankermasse 3 enthalten ist. Die Ankermasse 3 ist eine aushärtende Ein- oder Mehrkomponenten-Masse, beispielsweise ein Kleber oder ein Mörtel. Mit der Ankermasse 3 wird ein nicht dargestellter Anker in einem Sackloch 4 in einem Ankergrund 5 verankert. Eine Verankerung solcher Art wird auch als "chemische Verankerung" bezeichnet, der Anker ist stoffschlüssig und evtl. auch form- oder kraftschlüssig im Sackloch 4 befestigt. Der Ankergrund 5 ist beispielsweise Mauerwerk oder Beton. Das Injektionsrohr 1 ist vergleichsweise kurz, es ragt nur ein kurzes Stück in das Sackloch 4. Es genügt, wenn das Injektionsrohr 1 etwa das Ein- bis Zweifache des Durchmessers des Sacklochs 4 oder weniger in das Sackloch 4 ragt. Ein Druckverlust wegen des Strömungswiderstandes der Ankermasse 3 im Injektionsrohr 1 ist wegen der Kürze des Injektionsrohrs 1 niedrig. Das verringert den zum Einbringen der Ankermasse 3 in das Sackloch 4 notwendigen Druck, also den Auspressdruck bzw. die Auspresskraft der Kartusche 2 und/oder erhöht den Druck der Ankermasse 3 im Sackloch 4. Ein erhöhter Druck der Ankermasse 3 im Sackloch 4 bewirkt eine Verdichtung der Ankermasse 3 und verbessert eine Verfüllung des Sacklochs 4.

Außer dem Injektionsrohr 1 weist die erfindungsgemäße Vorrichtung einen Saugschlauch 6 auf, der um nahezu eine Tiefe des Sacklochs 4 über das Injektionsrohr 1 vorsteht und der bis an oder nahe an einen Lochgrund 7 des Sacklochs 4 in das Sackloch 4 eingebracht wird. Der Saugschlauch 6 ist an eine Absaugung 8 angeschlossen. Im dargestellten Ausführungsbeispiel weist die Absaugung 8 eine Strahlpumpe 9 auf, die an beispielsweise eine Pumpe 10 als Druckquelle angeschlossen ist. Die Absaugung mit einer Strahlpumpe 9 ist zwar bevorzugt, jedoch nicht zwingend für die Erfindung.

Die erfindungsgemäße Vorrichtung weist einen Kunststoffstopfen als Verschluss 11 für eine Lochmündung des Sacklochs 4 auf. Der Verschluss 11 weist zwei Durchgangslöcher auf, durch die das Injektionsrohr 1 mit kurzem Überstand und der Saugschlauch 6 durchgeführt sind. Der Saugschlauch 6 steht um nahezu die Tiefe des Sacklochs 4 aus dem Verschluss 11 vor, so dass der Saugschlauch 3 bis an oder nahe an den Lochgrund 7 des Sacklochs 4 ragt, wenn der Verschluss 11 in die Lochmündung gesteckt ist. Durch Verschieben des Saugschlauchs 6 in dem den Verschluss 11 bildenden Kunststoffstopfen kann die Länge des Überstands des Saugschlauchs 6 über den Verschluss 11 an die Tiefe des Sacklochs 4 angepasst werden. Der Verschluss 11 verbindet das Injektionsrohr 1 und den Saugschlauch 6 und legt die Länge fest, um die der Saugschlauch 6 über das Injektionsrohr 1 vorsteht. Der Überstand ist wie ausgeführt durch Verschieben des Saugschlauchs 6 in dem den Verschluss 11 bildenden Kunststoffstopfen einstellbar.

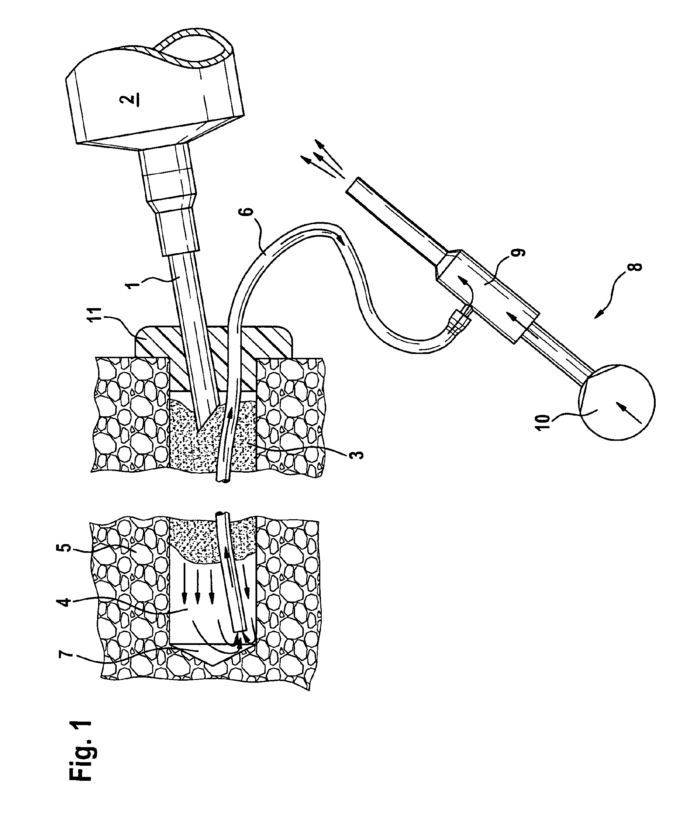

Zum Einbringen der Ankermasse 3 in das Sackloch 4 wird der den Verschluss 11 bildende Kunststoffstopfen wie in Figur 1 zu sehen in die Lochmündung des Sacklochs 4 gesteckt und verschließt diese. Ein hermetisch dichter Verschluss ist nicht zwingend notwendig. Der Saugschlauch 6 ragt bis nahe an den Lochgrund 7, das Injektionsrohr 1 ragt nur ein kurzes Stück in das Sackloch 4. Durch Auspressen der Kartusche 2 wird die Ankermasse 3 durch das Injektionsrohr 1 in das Sackloch 4 eingebracht. Während des Einbringens wird Luft aus dem Sackloch 4 mit der Absaugung 8 abgesaugt und auf diese Weise ein Unterdruck im Sackloch 4 erzeugt. Der Unterdruck bewirkt eine Förderwirkung, der die Ankermasse 3 zum Lochgrund 7 fördert, es wird eine gleichmäßige Verfüllung des Sacklochs 4 von der Lochmündung bis zum Lochgrund 7 erzielt. Erreicht die Ankermasse 3 den Lochgrund 7 bzw. das Ende des Saugschlauchs 6, wird die Absaugung 8 ausgeschaltet. Durch Nachpressen mit der Kartusche 2 kann die Ankermasse 3 im Sackloch 4 unter Druck gesetzt, d.h. verdichtet werden, um die Verfüllung des Sacklochs 4 zu verbessern. Der den Verschluss 11 bildende Kunststoffstopfen verhindert einen Austritt der Ankermasse 3 aus dem Sackloch 4.

Nach dem Einbringen der Ankermasse 3 in das Sackloch 4 wird der den Verschluss 11 bildende Kunststoffstopfen und mit ihm das Injektionsrohr 1 und der Saugschlauch 6 aus dem Sackloch 4 herausgezogen und beispielsweise ein nicht dargestellter Anker in die Ankermasse 3 in das Sackloch 4 eingebracht, der nach Aushärten der Ankermasse 3 im Sackloch 4 im Ankergrund 5 verankert ist.

Die Verwendung einer Strahlpumpe 9 für die Absaugung 8 hat den Vorteil, dass keine Ankermasse 3, die evtl. durch den Saugschlauch 6 angesaugt wird, zur Druckquelle, also beispielsweise in die Pumpe 10, gelangt. Evtl. in die Strahlpumpe 9 gelangte Ankermasse 3 lässt sich ohne Weiteres ausblasen, wenn Luft angesaugt wird.

### Bezugszeichenliste

### Verfahren und Vorrichtung zum Einbringen einer Ankermasse in ein Sackloch

- 1: Injektionsrohr
- 2: Kartusche
- 3: Ankermasse
- 4: Sackloch
- 5: Ankergrund
- 6: Saugschlauch
- 7: Lochgrund
- 8: Absaugung
- 9: Strahlpumpe
- 10: Pumpe
- 11: Verschluss

## Patentansprüche

1. Verfahren zum Einbringen einer Ankermasse (3) in ein Sackloch (4), **dadurch gekennzeichnet, dass** während des Einbringens der Ankermasse (3) in das Sackloch (4) Luft zwischen einem Lochgrund (7) und der Ankermasse (3) abgesaugt wird.

2. Verfahren nach Anspruch 1, **dadurch gekennzeichnet, dass** die Luft nahe dem Lochgrund (7) aus dem Sackloch (4) abgesaugt wird.

3. Verfahren nach Anspruch 1, **dadurch gekennzeichnet, dass** die Ankermasse (3) nahe einer Lochmündung in das Sackloch (4) eingebracht wird.

4. Vorrichtung zum Einbringen einer Ankermasse (3) in ein Sackloch (4), mit einem Injektionsrohr (1), **dadurch gekennzeichnet, dass** die Vorrichtung einen Saugschlauch (6) aufweist, der über das Injektionsrohr (1) vorsteht.

5. Vorrichtung nach Anspruch 4, **dadurch gekennzeichnet, dass** die Vorrichtung einen Verschluss (11) für die Lochmündung des Sacklochs (4) aufweist, durch den das Injektionsrohr (1) und der Saugschlauch (6) durchgeführt sind.

6. Vorrichtung nach Anspruch 4, **dadurch gekennzeichnet, dass** der Saugschlauch (6) an eine Strahlpumpe (9) angeschlossen ist.
